# EUROPEAN PATENT SPECIFICATION

(11) **EP 2 796 348 B1**
(45) Date of publication and mention of the grant of the patent: **08.02.2017**
(21) Application number: 13165247.1
(22) Date of filing: 24.04.2013
(51) Int. Cl.: B62D 25/10, B60R 21/38

(54) **Automobile hood link-type active hinge device**
Automobilhaube mit aktiver Verbindungsscharniervorrichtung
Dispositif de charnière active de type articulation de capot automobile

(43) Date of publication of application: 29.10.2014
(73) Proprietor: Gumchang Co., Ltd., Yeongcheon-si, Gyeongsangbuk-do (KR)
(72) Inventor: Song, Jae Yeol, Daegu (KR)
(74) Representative: Kacsuk, Zsófia

(56) References cited:
- EP-A1- 1 319 561
- DE-A1-102004 062 105
- DE-A1-102006 016 176
- FR-A1- 2 833 224
- US-A1- 2007 062 749

## Description

### Technical Field

The present invention relates to an automobile hood link-type active hinge device that is applied to both of a hinge type opening hood and a link type hinge opening hood through which the hood is open at the front side thereof, and more particularly, to an automobile hood link-type active hinge device that is capable of rapidly raising the rear end portion of the hood when an automobile collides against a pedestrian, thereby releasing the impact applied to the pedestrian's head, while giving the reliability in the operation for raising the rear end portion of the hood.

### Background Art

As well known, if an automobile collides against a pedestrian during driving, the rear end portion of a hood or the front glass of the automobile collides against the pedestrian's head, thereby causing his or her head to be seriously injured.

The hood is mounted to a body of the automobile by means of hinges so as to open and close an engine room, and typically, if the weight of the hood is light, hinge type opening and closing is conducted, whereas if the weight and strength of the hood are increased, link type hinge opening and closing is conducted.

In the configuration of the conventional hood to which the hinge type opening and closing and the link type hinge opening and closing are applied, so as to prevent a pedestrian's head from being injured upon the collision of the automobile against the pedestrian, the rear end portion of the hood is rapidly raised to ensure the impact-absorbing space in the hood, and alternatively, the rear end portion of the hood is rapidly raised to develop a pedestrian-protecting air bag to the front glass of the automobile.

As one example of the prior art, there is proposed Korean Patent No. 10-0774772 disclosing an active hood hinge device that is applied to a four-bar link type hood hinge and configured complicatedly to have three link members and four hinge pins, thereby increasing the production cost and failing to achieve the lightness of the automobile, and to primarily raise the inside and outside hinge members at the time of the operation thereof and secondarily raise the rear end portion of the hood, thereby delaying the time in raising the rear end portion of the hood.

As another example of the prior art, there is proposed Korean Patent No. 10-1020487 disclosing an automobile hood active hinge device that is applied to an one-bar link type hood hinge and configured simply to have a first member fixedly coupled to a body of an automobile, a second member fixedly coupled to a hood, a connection member, and a detachable type fastening member. However, a synthetic resin bushing adapted to fix the detachable type fastening member exhibits low durability, and as the duration in use is extended, the fastening between the connection member and the second member is not maintained in a rigid state. A further example is known from DE 102004002105 A1.

So as to fixedly maintain the link member of the automobile hood hinge device in a normal state, further, a pin hole is formed on the link member in such a manner as to be coupled to a safety pin, thereby preventing the link member from being spread out.

Under the above-mentioned configuration, at the time when the automobile collides against a pedestrian, so as to develop the link member of the automobile hood hinge device and to raise the rear end portion of the hood, the safety pin coupled to the pin hole formed on the link member is escaped therefrom. At this time, the mutual frictional resistance between the inner peripheral surface of the pin hole and the safety pin occurs, and thus, the active hinge device is not rapidly operated. As mentioned above, accordingly, it is understood that the conventional active hinge devices have had structural problems.

As another example of the prior art, DE102004062105 A1 shows an arrangement for lifting the bonnet of a vehicle in case of collision with a pedestrian, comprising swivel mounted elements and a lifting unit. The bonnet of the vehicle is attached to an upper element swivel mounted to the front of a lower lever joined to a central element with its rear end located at the vehicle body. The parts are held in a joined position by a turning catch supported by second detent. In case of a collision with a pedestrian or cyclist a lifting unit working with a helical spring and accommodated in a cylindrical housing is activated by a sensor and pushed against the detent from below in order to release the catch. This arrangement, however, is complex and less reliable.

### Disclosure

### Technical Problem

Accordingly, the present invention has been made in view of the above-mentioned problems occurring in the prior art, and it is an object of the present invention to provide an automobile hood link-type active hinge device that is configured simply to raise the rear end portion of a hood, thereby reducing the production cost and accomplishing the lightness of an automobile, to perform the fast escaping of a safety pin from an arm piece and a pick-up piece at the time when the automobile collides against a pedestrian, thereby improving the reliability of the operation and the durability thereof, and to reduce the time needed to raise the rear end portion of the hood, thereby ensuring the safety of the pedestrian.

### Technical Solution

To accomplish the above object, according to the present invention, there is provided an automobile hood link-type active hinge device including: an arm piece rotatably coupled to a automobile body fixing stand by means of a hood opening side hinge shaft; a pick-up piece rotatably coupled to the arm piece by means of an operating side hinge shaft and having a hood coupled to the top portion thereof; a bushing coupled to coupling holes formed on the arm piece and the pick-up piece to fix or separate the arm piece and the pick-up piece to each other or from each other; a coupling-releasing member having a safety pin in such a manner as to be coupled to the bushing; and an actuator in such a manner as to separate the safety pin from the bushing and rapidly raise the rear end portion of the hood at the time when the automobile collides against a pedestrian.

### Advantageous Effect

According to the present invention, the automobile hood link-type active hinge device is configured simply to raise the rear end portion of the hood and to perform the rigid coupling or easy separation between the arm piece and the pick-up piece by means of the bushing, thereby improving the durability thereof.

According to the automobile hood link-type active hinge device, additionally, if an accident happens, the actuator is operated to operate the coupling-releasing member and at the same time to rapidly raise the rear end portion of the hood, thereby releasing the impact applied to the head of the pedestrian, rapidly providing a given space in which a pedestrian-protecting air bag is developed at a fast speed, and ensuring the safety of the pedestrian.

### Description of Drawings

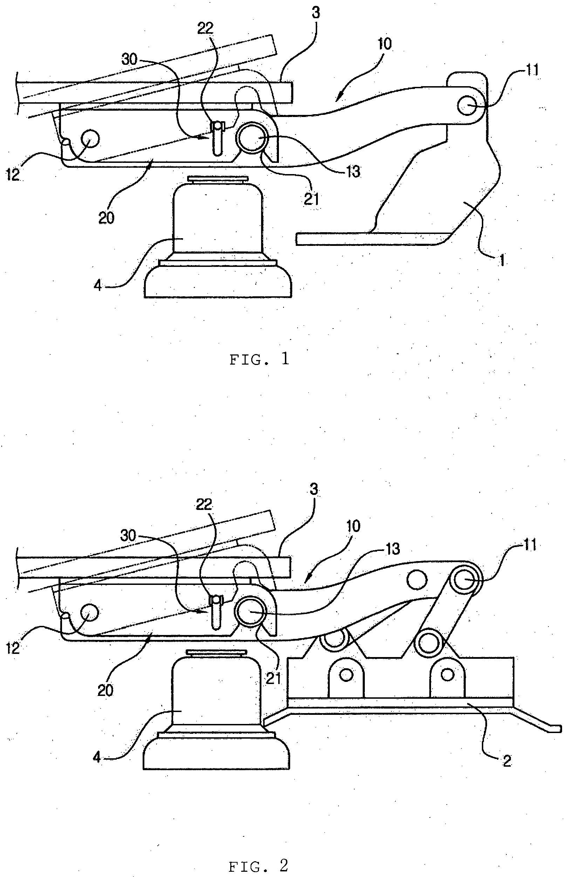

FIG.1 is an exemplary view showing an automobile hood link-type active hinge device according to the present invention applied to a hinge type automobile body fixing stand.
FIG.2 is an exemplary view showing an automobile hood link-type active hinge device according to the present invention applied to a link type hinge automobile body fixing stand.

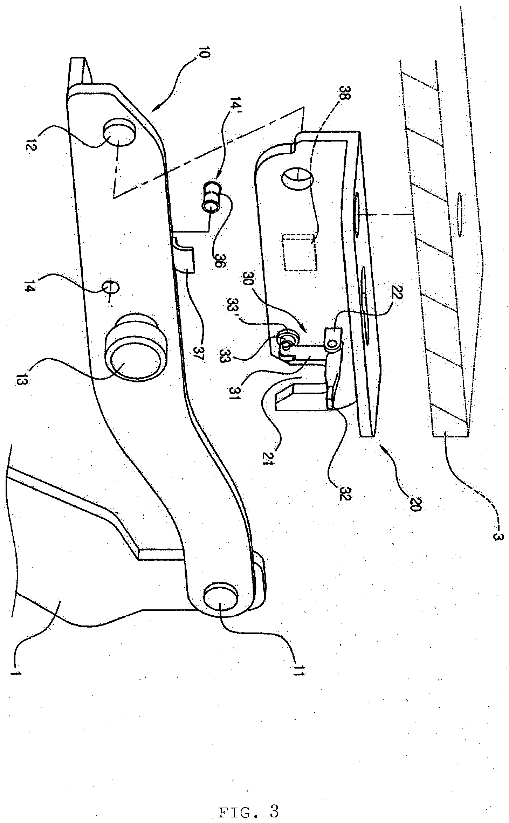

FIG.3 is an exploded perspective view showing the automobile hood link-type active hinge device according to the present invention.
FIG.4 is a perspective view showing the operation of the active hinge device at the time when a hood is open.
FIG.5 is a perspective view showing the operation of the active hinge device at the time when the rear end portion of the hood moves upwardly.

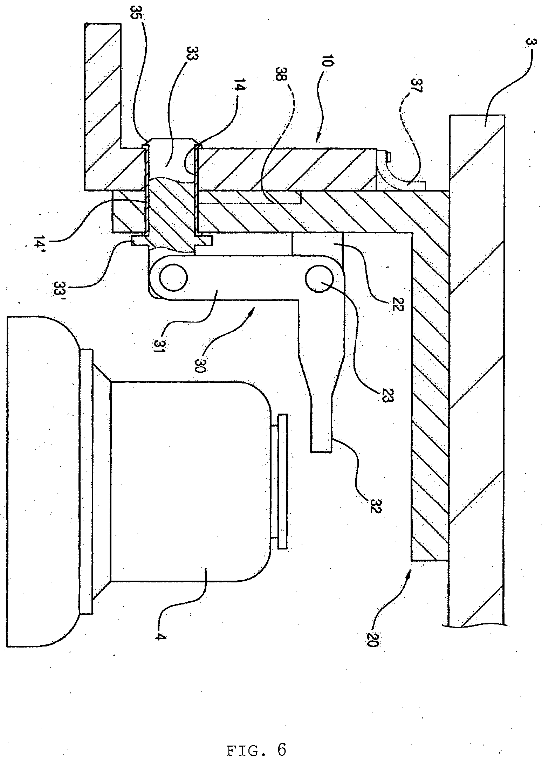

FIG.6 is an exemplary view showing the state before a coupling-releasing member is operated in the active hinge device according to the present invention.
FIG.7 is an exemplary view showing the state after the coupling-releasing member is operated in the active hinge device according to the present invention.

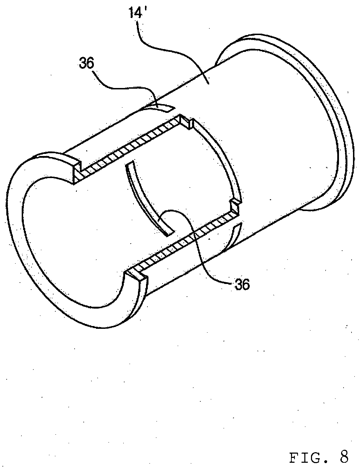

FIG.8 is a perspective view showing the configuration of a bushing coupled to coupling holes passed through a pick up piece and an arm piece in the active hinge device according to the present invention.

### Best Mode for Invention

Hereinafter, an explanation on an automobile hood link-type active hinge device according to the present invention will be given with reference to the attached drawings.

As shown, an automobile hood link-type active hinge device according to the present invention includes: an arm piece 10 connected to a hinge type automobile body fixing stand 1 or a link hinge type automobile body fixing stand 2 (hereinafter, referred to simply as a fixing stand) ; a pick-up piece 20 connected to the arm piece 10 by means of an operating side hinge shaft 12; a coupling-releasing member 30 having a safety pin 33 adapted to fix and separate the arm piece 10 to and from the pick-up piece 20 to which a hood 3 is connected; and an actuator 4 adapted to operate the coupling-releasing member 30 and to raise the rear end portion of the hood 3.

The arm piece 10 is connected on one side thereof to the fixing stand 1 and a hood opening side hinge shaft 11 and connected on the other side thereof to the pick-up piece 20 by means of the operating side hinge shaft 12. Further, the arm piece 10 has a stopper 13 mounted in the middle portion thereof in such a manner as to couple a stopper locking groove 21 formed on the pick-up piece 20 thereto.

The pick-up piece 20 is connected to the hood 3 and has the stopper locking groove 21 formed on one side thereof in such a manner as to be coupled to the stopper 13 mounted on the arm piece 10. The pick-up piece 20 and the arm piece 10 have coupling holes 14 formed passed therethrough, and a bushing 14' having two or more incised slots 36 formed on the central periphery thereof is coupled to the coupling holes 14. Further, the pick-up piece 20 has a fixing member 22 mounted on one side surface thereof in such a manner as to couple a support portion 31 of the coupling-releasing member 30 thereto by means of a rotary shaft 23.

The coupling-releasing member 30 is adapted to release the safety pin 33 from the bushing 14' coupled to the coupling holes 14 formed on the pick-up piece 20 and the arm piece 10, and includes the supporting portion 31 coupled to the fixing member 22 mounted on one side surface of the pick-up piece 20 around the rotary shaft 23, a releasing lever 32 mounted on the upper portion of the supporting portion 31, the safety pin 33 having a base piece 33' mounted on the underside of the supporting portion 31 in such a manner as to be coupled to the bushing 14' coupled to the coupling holes 14 formed on the pick-up piece 20 and the arm piece 10, the base piece 33' being brought into close contact with the bushing 14', and a locking piece 35 formed on one side periphery of the safety pin 33 by means of punching in such a manner as to fix the pick-up piece 20 and the arm piece 10 thereto, thereby preventing the formation of a gap between the pick-up piece 20 and the arm piece 10.

The safety pin 33 of the coupling-releasing member 30 is coupledly passed through the bushing 14' coupled to the coupling holes 14 formed on the pick-up piece 20 and the arm piece 10, and if the releasing lever 32 is raised by means of the operation of the actuator 4 to cause the supporting portion 31 to be rotated around the rotary shaft 23, the safety pin 33 is escaped from the bushing 14'.

The actuator 4 is located under the releasing lever 32 of the coupling-releasing member 30, and when the collision against a pedestrian is sensed, the actuator 4 is rapidly operated to raise the releasing lever 32 of the coupling-releasing member 30 and at the same time to allow the safety pin 33 to release the coupling between the pick-up piece 20 and the arm piece 10. After that, the releasing lever 32 is kept raised to permit the pick-up piece 20 and the rear end portion of the hood 3 to be raised around the operating side hinge shaft 12.

So as to prevent the pick-up piece 20 to which the hood 3 is connected from being descended after raised, the arm piece 10 has an elastic stopper 37 mounted on one side thereof in such a manner as to be locked to the stopper locking groove 38 formed on the pick-up piece 20.

Under the above-mentioned configuration, an explanation on the operation of the automobile hood link-type active hinge device according to the present invention will be given in detail.

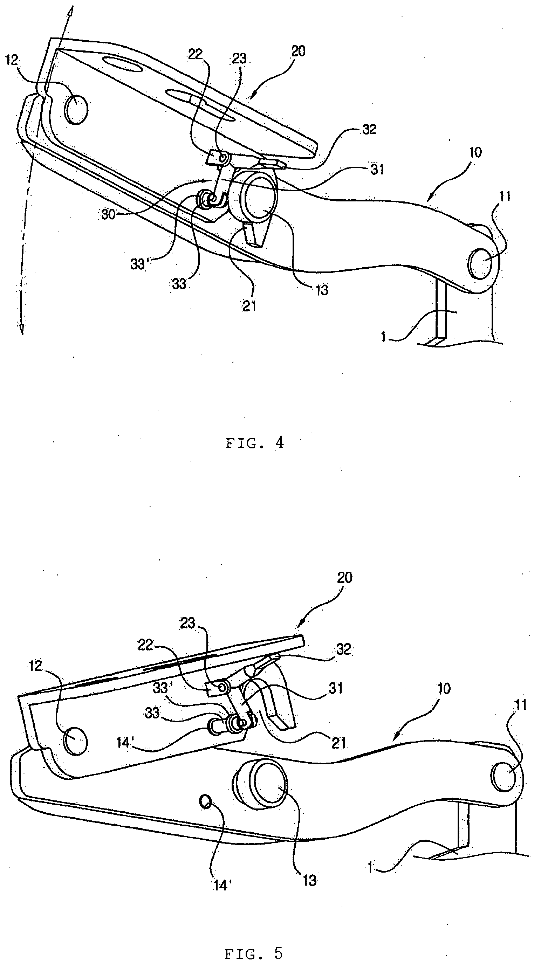

So as to open the hood 3 in a normal state, as shown in FIG.4, the arm piece 10 and the pick-up piece 20 are rotated around the hood opening side hinge shaft 11.

In more detail, the arm piece 10 and the pick-up piece 20 are coupled to each other by means of the operating side hinge shaft 12 and the bushing 14' coupled to the coupling holes 14 thereof, to which the safety pin 33 of the coupling-releasing member 30 is coupled, and they are maintained in the coupled state by means of the locking piece 35 formed through punching on the safety pin 33 and by means of the coupling between the stopper 13 and the stopper locking groove 21, so that they are rotated around the hood opening side hinge shaft 11 to allow the hood 3 to be open.

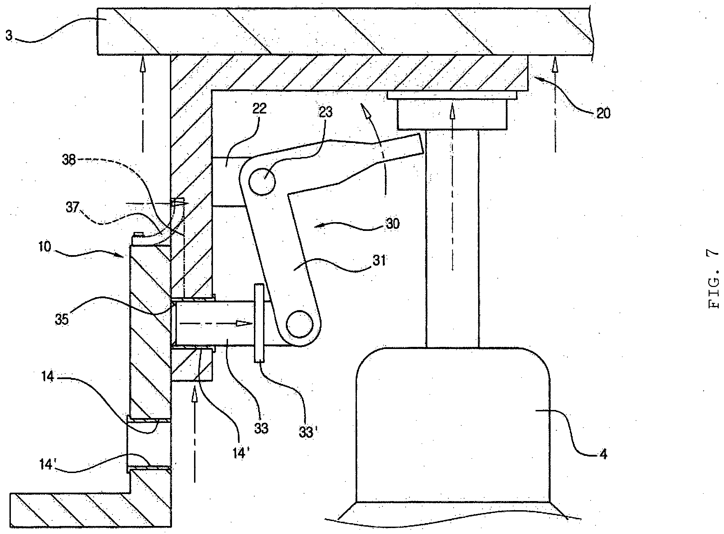

If the automobile collides against a pedestrian during driving, as shown in FIGS.5 and 7, the actuator 4 is operated to push and raise the releasing lever 32 of the coupling-releasing member 30.

As a result, the safety pin 33 of the coupling-releasing member 30 disposed in the opposite direction to the releasing lever 32 is escaped from the bushing 14' coupled to the arm piece 10 and the pick-up piece 20, thereby releasing the coupling between the arm piece 10 and the pick-up piece 20. Next, the actuator 4 is kept operated to raise the pick-up piece 20, so that the bushing 14' are divided into two parts around the incised slots 36 formed thereon and the pick-up piece 20 is rotated around the operating side hinge shaft 12 to rapidly raise the rear end portion of the hood 3.

Referring in more detail to the operation for raising the rear end portion of the hood 3, if the actuator 4 is operated to push the releasing lever 32 upwardly, the supporting portion 31 is rotated around the rotary shaft 23, and through the rotation of the supporting portion 31, the safety pin 33 coupled to the bushing 14' is escaped from the bushing 14' to release the coupling between the arm piece 10 and the pick-up piece 20. At this time, the locking piece 35 formed through the punching on one side periphery of the safety pin 33 is stretched out by means of the force generated by the escape of the safety pin 33 from the bushing 14', and the bushing 14' provides lubrication when the safety pin 33 is escaped therefrom, so that the coupling between the arm piece 10 and the pick-up piece 20 can be rapidly released to raise the rear end portion of the hood 3 at a fast speed.

After the pick-up piece 20 to which the hood 3 is connected has been raised, it is descended due to its load, and at this time, it collides against the actuator 4. Alternatively, the elastic stopper 37 formed on one side of the arm piece 10 elastically spreads into the stopper locking groove 38 formed on the raised pick-up piece 20 and is inserted into the stopper locking groove 38, thereby preventing the pick-up piece 20 to which the hood 3 is connected from being descended.

As the rear end portion of the hood 3 and the pick-up piece 20 are rotated around the operating side hinge shaft 12, the rear end portion of the hood 3 is rapidly raised in the state where the front end portion thereof is fixed to the body of the automobile, without having any upward movement of the arm piece 10, so that if the hood 3 collides against a pedestrian, the impact-absorbing space is provided to ensure the safety of the pedestrian, and if the front glass of the automobile collides against the pedestrian, the rear end portion of the hood 3 is raised to make an air bag developed to the front glass, thereby ensuring the safety of the pedestrian.

## Claims

1. An automobile hood link-type active hinge device configured to allow the rear end portion of a hood (3) open at the front side of an automobile to be raised to release the impact applied to a pedestrian's head upon collision against the pedestrian, the active hinge device comprising:
an arm piece (10) rotatably coupled to an automobile body fixing stand (1),(2) by means of a hood opening side hinge shaft (11);
a pick-up piece (20) rotatably coupled to the arm piece (10) by means of an operating side hinge shaft (12) and having a hood (3) coupled to the top portion thereof;
**characterized by**
a bushing (14') coupled to coupling holes (14) formed on the arm piece (10) and the pick-up piece (20) to fix or separate the arm piece (10) and the pick-up piece (20) to each other or from each other, the bushing (14') having two or more incised slots (36) formed on the central periphery thereof;
a coupling-releasing member (30) having a safety pin (33) coupled to the bushing (14'), the safety pin (33) having a base piece (33') formed thereon and a locking piece (35) formed on one side periphery thereof through punching to prevent the escaping from the bushing (14'), a supporting portion (31) coupled to a fixing member (22) around a rotary shaft (23) in such a manner as to connect the safety pin (33) to the lower portion thereof, and a releasing lever (32) mounted on the upper portion of the supporting portion (31); and
an actuator (4) located under the releasing lever (32) in such a manner as to operate the releasing lever (32) adapted to escape the safety pin (33) from the bushing (14') and to raise the rear end portion of the hood (3) at the time when the automobile collides against the pedestrian.

2. The automobile hood link-type active hinge device according to claim 1, wherein the pick-up piece (20) coupled to the arm piece (10) by means of the operating side hinge shaft (12) has a stopper locking groove (38) formed on one side thereof in such a manner as to couple an elastic stopper (37) disposed on the arm piece thereto.

3. The automobile hood link-type active hinge device according to claim 1, wherein the elastic stopper (37) disposed on one side of the arm piece (10) is insertedly fitted to the stopper locking groove (38) formed on the pick-up piece (20) so as to prevent the pick-up piece connected to the hood from being descended after raised.

## Patentansprüche

1. Eine aktive, verknüpfungstypartige Automobilhaubescharnier-vorrichtung, welche konfiguriert ist, um es zu erlauben, den hinteren Endabschnitt von einer Haube (3) der Vorderseite von einem Automobil zu öffnen, um sich zu erheben, um die Auswirkung, welche einem Kopf von einem Fußgänger aufgrund einer Kollision gegen den Fußgänger appliziert wird, zu entlasten, die aktive Scharniervorrichtung umfasst:
ein Armteil (10) rotierbar gekoppelt zu einem Automobilkörperbefestigungsaufbau (1), (2) durch Mittel von einem Haubenöffnungsseitescharnierschaft (11);
ein Aufhebeteil (20) rotierbar gekoppelt zu dem Armteil (10) durch Mittel von einem Bedienungsseitenscharnierschaft (12) und aufweisend eine Haube (3) gekoppelt zu dem Deckelabschnitt davon;
**gekennzeichnet durch**
eine Buchse (14') gekoppelt zu Koppellöchern (14), welche auf dem Armteil (10) und dem Aufhebeteil (20) gebildet sind, um das Armteil (10) und das Aufhebeteil (20) zueinander oder voneinander zu fixieren oder zu separieren, wobei die Buchse (14') zwei oder mehr eingeschnittene Schlitze (36) aufweist, welche auf der zentralen Peripherie davon gebildet sind;
ein Kupplungsfreigabeelement (30), aufweisend ein Sicherheitsstift (33), welcher zu der Buchse (14') gekoppelt ist, der Sicherheitsstift (33) aufweisend ein Basisteil (33'), welches darauf gebildet ist und ein Verschlussteil (35), welches auf einer Seitenperipherie **durch** Stanzen gebildet ist, um das Ausbrechen von der Buchse (14') zu verhindern, einen Stützabschnitt (31), welches zu einem Befestigungselement (22) um einen Rotationsschaft (23) auf solche Weise gekoppelt ist, um den Sicherheitsstift (33) zu dem unteren Abschnitt davon zu verbinden, und einem Freigabehebel (32), welcher auf dem oberen Abschnitt von dem Stützabschnitt (31) montiert ist;
und
ein Aktuator (4), welcher unter dem Freigabehebel (32) auf solche Weise platziert ist, um den Freigabehebel (32) zu betätigen, welcher adaptiert ist, um den Sicherheitsstift (33) aus der Buchse (14') auszubrechen und um den hinteren Endabschnitt von einer Haube (3) zu der Zeit, wenn das Automobil gegen den Fußgänger kollidiert, anzuheben-

2. Die aktive, verknüpfungstypartige Automobilhaubescharnier-vorrichtung nach Anspruch 1, wobei das Aufhebeteil (20), welches zu dem Armteil (10) durch Mittel von dem Bedienungsseitenscharnierschaft (12) gekoppelt ist, eine Sperrnut (38) aufweist, welche auf einer Seite davon auf solche Weise gebildet ist, um einen elastischen Verschluss (37) zu koppeln, welcher auf dem Armteil davon angeordnet ist.

3. Die aktive, verknüpfungstypartige Automobilhaubescharnier-vorrichtung nach Anspruch 1, wobei der elastische Verschluss (37), welcher auf einer Seite von dem Armteil (10) angeordnet ist, eingesteckt ist, passend zu der Sperrnut (38), welche auf dem Aufhebeteil (20) gebildet ist, um so das Aufhebeteil, welches zu der Haube verbunden ist, zu hindern sich abzusenken, nachdem es angehoben ist.

## Revendications

1. Dispositif de charnière active du type articulation de capot automobile configuré pour permettre à la partie d'extrémité arrière d'un capot (3) s'ouvrant au niveau du côté avant d'une automobile d'être levée pour diminuer l'impact appliqué sur la tête d'un piéton lors d'une collision contre le piéton, le dispositif de charnière active comprenant :
une pièce de bras (10) couplée de manière rotative à un montant de fixation de carrosserie automobile (1), (2) par l'intermédiaire d'un axe d'articulation côté ouverture de capot (11) ;
une pièce de relevage (20) couplée de manière rotative à la pièce de bras (10) au moyen d'un axe d'articulation côté actionnement (12) et ayant un capot (3) couplé à sa partie supérieure ;
**caractérisé par**
une douille (14') couplée à des trous de couplage (14) formés sur la pièce de bras (10) et la pièce d'actionnement (20) pour fixer l'une à l'autre ou séparer l'une de l'autre la pièce de bras (10) et la pièce de relevage (20), la douille (14') ayant deux fentes incisées (36) ou plus formées sur sa périphérie centrale ;
un élément de couplage-libération (30) ayant une goupille de sécurité (33) couplée à la douille (14'), la goupille de sécurité (33) ayant une pièce de base (33') formée sur celle-ci, et une pièce de verrouillage (35) formée sur une périphérie latérale de celle-ci par poinçonnement pour empêcher l'échappement de la douille (14'), une partie de support (31) couplée à un élément de fixation (22) autour d'un axe de rotation (23) de manière à connecter la goupille de sécurité (33) à sa partie inférieure, et un levier de libération (32) monté sur la partie supérieure de la partie de support (31) ; et
un actionneur (4) situé sous le levier de libération (32) de manière à actionner le levier de libération (32), adapté pour l'échappement de la goupille de sécurité (33) depuis la douille (14'), et pour lever la partie d'extrémité arrière du capot (3) au moment où l'automobile entre en collision avec le piéton.

2. Dispositif de charnière active du type articulation de capot automobile selon la revendication 1, dans lequel la pièce de relevage (20) couplée à la pièce de bras (10) par l'intermédiaire de l'axe d'articulation côté actionnement (12) a une rainure de verrouillage de butée (38) formée sur un côté de celle-ci de manière à coupler à celle-ci une butée élastique (37) disposée sur la pièce de bras.

3. Dispositif de charnière active du type articulation de capot automobile selon la revendication 1, dans lequel la butée élastique (37) disposée sur un côté de la pièce de bras (10) est agencée par insertion dans la rainure de verrouillage de butée (38) formée sur la pièce de relevage (20) de manière à empêcher la pièce de relevage reliée au capot d'être descendue après avoir été levée.
